# EUROPEAN PATENT SPECIFICATION

(11) **EP 4 130 677 B1**
(45) Date of publication and mention of the grant of the patent: **07.10.2026**
(21) Application number: 22188129.5
(22) Date of filing: 01.08.2022
(51) Int. Cl.: G01C 23/00, G06Q 10/10, G08G 5/00, B64D 43/00, B64D 45/00, G08G 5/21, G08G 5/53, G08G 5/55, G08G 5/76

(54) **VISUALIZATION OF PREDICTIVE HEALTH MONITORING**
VISUALISIERUNG VON PRÄDIKTIVER GESUNDHEITSÜBERWACHUNG
VISUALISATION DE LA SURVEILLANCE PRÉDICTIVE DE LA SANTÉ

(30) Priority: 02.08.2021 US 202117392009
(43) Date of publication of application: 08.02.2023
(73) Proprietor: Rockwell Collins, Inc., Cedar Rapids, IA 52498 (US)
(72) Inventor: BYXBE, Valerie R., Cedar Rapids (US); DUNLAY, Angela N., Marion, IA (US)
(74) Representative: Dehns

(56) References cited:
- US-A1- 2015 142 224
- US-A1- 2017 161 660
- ANONYMOUS: "Amsterdam Hourly Weather - AccuWeather Forecast for North Holland Netherlands", 25 July 2017 (2017-07-25), pages 1 - 3, XP093238317, Retrieved from the Internet <URL:https://web.archive.org/web/20170725071533/http://www.accuweather.com/en/nl/amsterdam/249758/hourly-weather-forecast/249758> [retrieved on 20250110]
- ANONYMOUS: "[D] Use of machine learning in weather forecast", 12 May 2019 (2019-05-12), pages 1 - 6, XP093238356, Retrieved from the Internet <URL:https://www.reddit.com/r/MachineLearning/comments/bnpgvw/d_use_of_machine_learning_in_weather_forecast/?rdt=34112> [retrieved on 20250110]

## Description

### BACKGROUND

Predictive health monitoring systems observe and flag events that could or will impact a pilot's ability to complete a mission. However, there are no useful mechanisms for delivering that information to the pilot in a meaningful way that increases the pilot's awareness of the situation. US 2017/161660 relates to predicting event types and time intervals for projects.

### SUMMARY

The invention is set out as in the independent claims. Optional features are set out as in the dependent claims.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
- FIG. 1: shows a block diagram of a system for implementing an exemplary embodiment;
- FIG. 2: shows an action window with a rendered mission timeline;
- FIG. 3: shows a rendered mission timeline including an exemplary embodiment; and
- FIG. 4: shows a flowchart of a method for incorporating predictive health events into a mission timeline according to an exemplary embodiment.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a system for incorporating predictive health data into a mission timeline. The system receives a predictive health event, identifies a time frame for the event, and incorporates the event into a mission timeline.

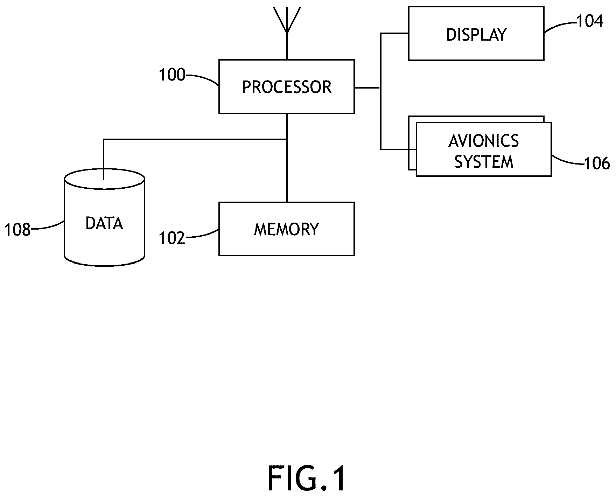

Referring to FIG. 1, a block diagram of a system for implementing an exemplary embodiment is shown. The system includes a processor 100, memory 102 connected to the processor 100, and a display 104 for rendering an action window and mission timeline. The processor 100 receives one or more predicted events; each predicted event defines an event type and some indication of the predicted time of occurrence. For example, a separate avionics system 106 monitoring fuel usage may determine that, based on current or average consumption rates, an aircraft will run out of fuel at a predetermined time in the future. That event, including the type ("fuel exhaustion") and time, and transmitted to the processor 100.

The processor 100 maintains an action window on the display including a rendered mission timeline including various markers of relevant mission events. The processor 100 identifies where on the mission timeline the predicted event occurs and incorporates some event symbology into the mission timeline corresponding to the event type at the identified time relative to the overall mission. In at least one embodiment, the processor 100 may re-render existing mission events so as to avoid obfuscating the predicted event symbology and vice-versa.

The predicted events define a weighted probability of occurrence over time. The processor 100 renders the predicted event over a window of probability. The window of probability includes an artifice to indicate the distribution of probability; for example, the window of probability may be shaded with the most shaded portion in the temporal region of highest probability, and reduced shading accordingly. Alternatively, varying colors may be utilized for different probabilities. Additionally, a probability curve may be rendered in the window of probability.

In at least one embodiment, the predicted events may define a degradation curve corresponding to a window of time wherein the predicted event is likely to begin and progressively degrade over time.

The predicted events include an indication of an uncorrected outcome; that is to say, an indication of the anticipated result if the predicted event is not addressed. The indication of uncorrected outcome defines a separate time indication corresponding to when the uncorrected outcome will occur. For example, where the predicted event indicates fuel exhaustion, the uncorrected outcome may indicate engine failure and crash rendered on the mission timeline shortly afterwards. The predicted event indicates a mission critical system failure, and the uncorrected outcome indicates a time after the mission critical system failure when the mission will have to be aborted.

In at least one embodiment, avionics systems 106 may update predicted events from time to time. In at least one embodiment, the predicted events may be based on statistical analysis of various factors including factors internal to the aircraft and factors external to the aircraft. As factors are updated, the predicted events may also be updated. In at least one embodiment, predicted events may be based on a Bayesian probability analysis.

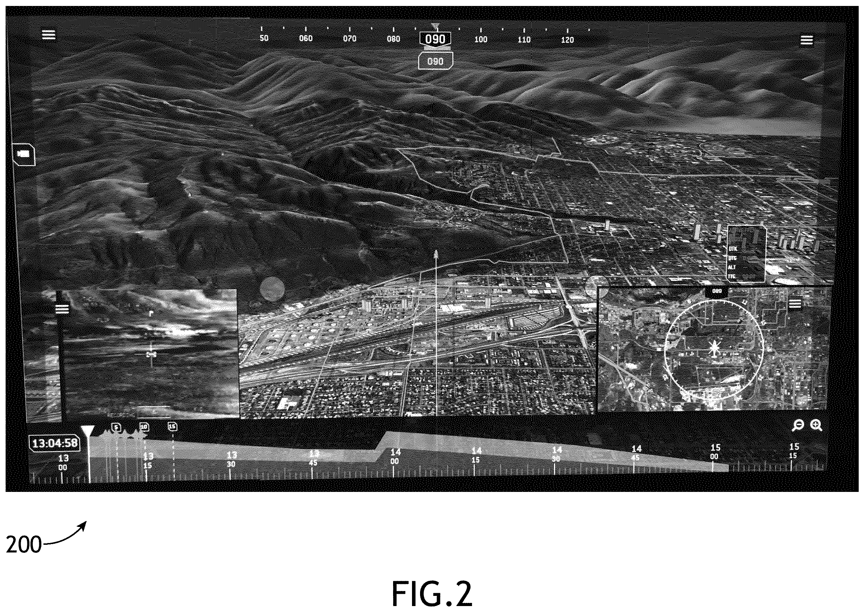

Referring to FIG. 2, an action window with a rendered mission timeline 200 is shown. In a unified action window display where multiple information sources are combined into a single rendered display, the mission timeline 200 may include indications of mission critical events over time (as distinct from other information sources which may be defined by points in space).

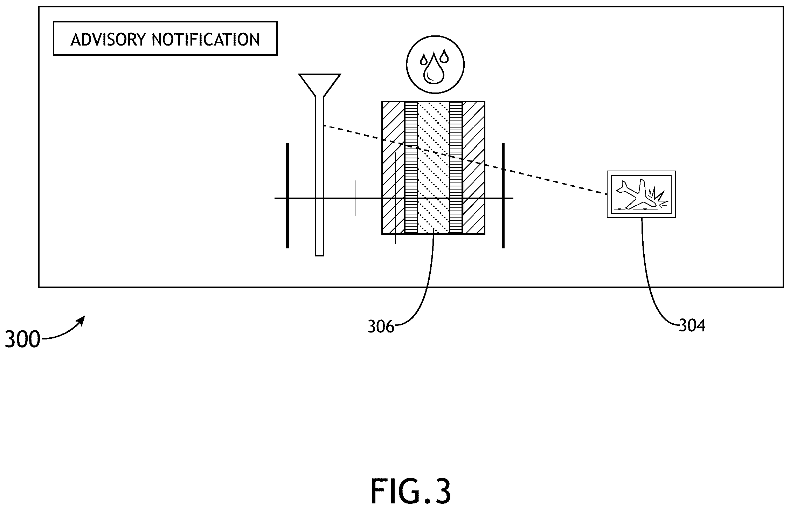

Referring to FIG. 3, a rendered mission timeline 300 including an exemplary embodiment is shown. The mission timeline 300 includes a symbol 302 corresponding an event type defined by a predicted event and a temporal indication 306 corresponding to a predicted time of the event. In at least one embodiment, the temporal indication 306 may comprise a window of probability with shaded regions corresponding to greater or lesser predicted probabilities of the event occurring at that time. Such window of probability is defined by statistical analysis of similar events via a machine learning algorithm.

The predicted event includes an uncorrected outcome corresponding to a result if the event is not addressed. The uncorrected outcome is also translated to an outcome symbol 304 and rendered at an indicated time on the mission timeline 300.

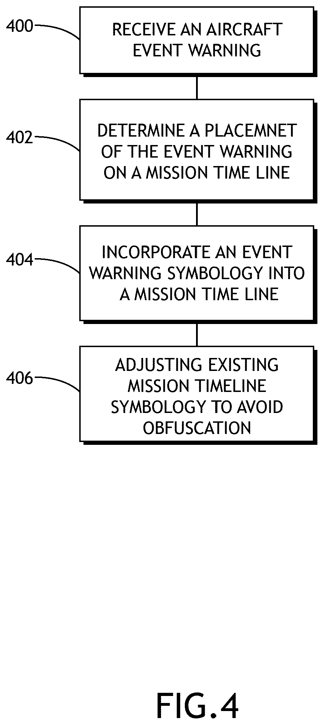

Referring to FIG. 4, a flowchart of a method for incorporating predictive health events into a mission timeline is shown. The system implementing the method receives 400 a predicted event warning comprising an event type and a predicted time of occurrence. The predicted time of occurrence comprises a weighted, probabilistic window of occurrence. In addition, the time of occurrence may comprise a degradation curve indicating a prediction of how the event may degrade over a period of time.

The system determines 402 a placement of the event warning withing a mission time line, and incorporates 404 the event warning into the timeline by identifying a symbol corresponding to the event type, and placing that symbology on the mission timeline at the determined placement. A window representing the weighted distribution is rendered at the appropriate mission timeline location.

In at least one embodiment, the location and / or time window may be periodically updated according to updated event details from a corresponding avionics system. Furthermore, surrounding symbology, such as mission event markers, may be adjusted 406 to accommodate the predicted event warning symbols.

In at least one embodiment, the predicted event warning symbology may comprise symbols corresponding to a predicted, uncorrected outcome, indicating a type and time of outcome that will occur if the predicted event is unaddressed.

In at least one embodiment, the predicted events may be based on current aircraft and environmental conditions, pilot entered information, stored statistical data, etc. Such data may be used by a trained neural network to produce the event type and predicted time of the predicted event warnings.

The visualization is a depiction of critical events that are predicted to impact mission success overlaid on a mission timeline. The predicted system degradation is visualized relative to a current state of the mission and aircraft, as well as the predicted events. It shows when a predicted event is likely to occur, and gives the user a certainty range, using opacity to communicate increasing or decreasing probability of occurrence. It also shows the user the predicted result if corrective action is not taken, in the form of an icon at the end of the degradation trend line.

A visualization system overlaid on the mission timeline gives a pilot an immediate understanding of when the flagged event would potentially impact the mission, and increase awareness by providing timely alerting. This information overlay will allow the pilot to predict future system status, increase the pilot's overall situation awareness in time-critical scenarios, and address the need for more advanced system monitoring technology in the flight deck.

It is believed that the inventive concepts disclosed herein and many of their attendant advantages will be understood by the foregoing description of embodiments of the inventive concepts disclosed, and it will be apparent that various changes may be made in the form, construction, and arrangement of the components thereof; and individual features from various embodiments may be combined to arrive at other embodiments. The form herein before described being merely an explanatory embodiment thereof.

## Claims

1. A computer apparatus comprising:
a display (104); and
at least one processor (100) in data communication with the display and a memory (102) storing processor executable code for configuring the at least one processor to:
receive one or more predicted events, each of the one or more predicted events comprising an event, a predicted time of the event, and an uncorrected outcome, the predicted time comprising a weighted probability window of occurrence;
determine a location on a rendered mission timeline corresponding to the predicted time of each of the one or more predicted events;
determine a first symbol for each predicted event based on the event type; determine a second symbol corresponding to the uncorrected outcome; render the first symbol at the determined location;
render the second symbol corresponding to the uncorrected outcome; and render the weighted probability window using opacity to communicate increasing or decreasing probability of occurrence as defined by a statistical analysis of similar events embodied in a machine learning algorithm;
wherein at least one predicted event corresponds to a mission critical system failure and the corresponding uncorrected outcome indicates a time after the mission critical system failure when the mission will have to be aborted.

2. The computer apparatus of Claim 1, wherein:
the predicted time comprises a degradation curve; and
the at least one processor is further configured to render the degradation curve across a corresponding window of occurrence.

3. The computer apparatus of any preceding Claim, wherein the at least one processor is further configured to:
periodically receive updates to the one or more predicted events; and
update corresponding symbology on the mission timeline.

4. The computer apparatus of any preceding Claim, wherein the one or more predicted events are determined via a Bayesian analysis of aircraft conditions and environmental conditions.

5. A method comprising:
receiving one or more predicted events, each of the one or more predicted events comprising an event type, a predicted time of the event, and an uncorrected outcome, the predicted time comprising a weighted probability window of occurrence;
determining a location on a rendered mission timeline corresponding to the predicted time of each of the one or more predicted events;
determining a first symbol for each predicted event based on the event type; determining a second symbol corresponding to the uncorrected outcome; rendering the first symbol at the determined location on the mission timeline; rendering the weighted probability window using opacity to communicate increasing or decreasing probability of occurrence as defined by a statistical analysis embodied in a machine learning algorithm; and
rendering the second symbol corresponding to the uncorrected outcome;
wherein at least one predicted event corresponds to a mission critical system failure and the corresponding uncorrected outcome indicates a time after the mission critical system failure when the mission will have to be aborted.

6. The method of Claim 5, wherein:
the predicted time comprises a degradation curve; and
further comprising rendering the degradation curve across a corresponding window of occurrence.

7. The method of any of Claims 5 or 6, further comprising:
periodically receiving updates to the one or more predicted events; and
updating corresponding symbology on the mission timeline; and/or
wherein the one or more predicted events are determined via a Bayesian analysis of aircraft conditions and environmental conditions.

8. A pilot awareness system comprising:
a display (104); and
at least one processor (100) in data communication with the display (104) and a memory (102) storing processor executable code for configuring the at least one processor to:
receive one or more predicted events, each of the one or more predicted events comprising an event type, a predicted time of the event, and an uncorrected outcome;
determine a location on a rendered mission timeline corresponding to the predicted time of each of the one or more predicted events;
determine a first symbol for each predicted event based on the event type; determine a second symbol corresponding to the uncorrected outcome;
render the first symbol at the determined location; and
render the second symbol corresponding to the uncorrected outcome;
wherein:
the predicted time comprises a weighted probability window of occurrence, and wherein the at least one processor is further configured to render the weighted probability window as variably shaded region defined by probabilities of the predicted time as defined by a statistical analysis of similar events embodied in a machine learning algorithm; and
at least one predicted event corresponds to a mission critical system failure and the corresponding uncorrected outcome indicates a time after the mission critical system failure when the mission will have to be aborted.

9. The pilot awareness system of Claim 8, wherein:
the predicted time comprises a degradation curve; and
the at least one processor is further configured to render the degradation curve across a corresponding window of occurrence.

10. The pilot awareness system of any of Claims 8 or 9,
wherein the at least one processor is further configured to:
periodically receive updates to the one or more predicted events; and
update corresponding symbology on the mission timeline.

11. The pilot awareness system of any of claims 8, 9 or 10, wherein the one or more predicted events are determined via a neural network configured to receive aircraft conditions and environmental conditions.

## Patentansprüche

1. Computereinrichtung, umfassend:
eine Anzeige (104); und
mindestens einen Prozessor (100) in Datenkommunikation mit der Anzeige und einen Speicher (102), der prozessorausführbaren Code zum Konfigurieren des mindestens einen Prozessors speichert, um: ein oder mehrere vorhergesagte Ereignisse zu empfangen, wobei jedes des einen oder der mehreren vorhergesagten Ereignisse ein Ereignis, einen vorhergesagten Zeitpunkt des Ereignisses und ein unkorrigiertes Ergebnis umfasst, wobei der vorhergesagte Zeitpunkt ein gewichtetes Wahrscheinlichkeitsfenster des Auftretens umfasst;
einen Ort auf einer gerenderten Missionszeitleiste zu bestimmen, der dem vorhergesagten Zeitpunkt jedes des einen oder der mehreren vorhergesagten Ereignisse entspricht;
ein erstes Symbol für jedes vorhergesagte Ereignis auf der Grundlage des Ereignistyps zu bestimmen;
ein zweites Symbol zu bestimmen, das dem unkorrigierten Ergebnis entspricht;
das erste Symbol an dem bestimmten Ort zu rendern;
das zweite Symbol zu rendern, das dem unkorrigierten Ergebnis entspricht; und
das gewichtete Wahrscheinlichkeitsfenster unter Verwendung von Deckkraft zu rendern, um eine zunehmende oder abnehmende Wahrscheinlichkeit des Auftretens zu vermitteln, wie sie durch eine statistische Analyse ähnlicher Ereignisse definiert ist, die in einem Algorithmus für maschinelles Lernen verkörpert ist; wobei mindestens ein vorhergesagtes Ereignis einem missionskritischen Systemausfall entspricht und das entsprechende unkorrigierte Ergebnis einen Zeitpunkt nach dem missionskritischen Systemausfall angibt, zu dem die Mission abgebrochen werden muss.

2. Computereinrichtung nach Anspruch 1, wobei:
der vorhergesagte Zeitpunkt eine Degradationskurve umfasst; und der mindestens eine Prozessor ferner konfiguriert ist, um die Degradationskurve über ein entsprechendes Fenster des Auftretens hinweg zu rendern.

3. Computereinrichtung nach einem der vorhergehenden Ansprüche, wobei der mindestens eine Prozessor ferner konfiguriert ist, um: periodisch Aktualisierungen der einen oder mehreren vorhergesagten Ereignisse zu empfangen; und
eine entsprechende Symbolik auf der Missionszeitleiste zu aktualisieren.

4. Computereinrichtung nach einem der vorhergehenden Ansprüche, das eine oder die mehreren vorhergesagten Ereignisse über eine Bayes'sche Analyse von Luftfahrzeugbedingungen und Umgebungsbedingungen bestimmt werden.

5. Verfahren, umfassend:
Empfangen eines oder mehrerer vorhergesagter Ereignisse, wobei jedes des einen oder der mehreren vorhergesagten Ereignisse einen Ereignistyp, einen vorhergesagten Zeitpunkt des Ereignisses und ein unkorrigiertes Ergebnis umfasst, wobei der vorhergesagte Zeitpunkt ein gewichtetes Wahrscheinlichkeitsfenster des Auftretens umfasst;
Bestimmen eines Orts auf einer gerenderten Missionszeitleiste, der dem vorhergesagten Zeitpunkt jedes des einen oder der mehreren vorhergesagten Ereignisse entspricht;
Bestimmen eines ersten Symbols für jedes vorhergesagte Ereignis auf der Grundlage des Ereignistyps;
Bestimmen eines zweiten Symbols, das dem unkorrigierten Ergebnis entspricht;
Rendern des ersten Symbols an dem bestimmten Ort auf der Missionszeitleiste;
Rendern des gewichteten Wahrscheinlichkeitsfensters unter Verwendung von Deckkraft, um eine zunehmende oder abnehmende Wahrscheinlichkeit des Auftretens zu vermitteln, wie sie durch eine statistische Analyse definiert ist, die in einem Algorithmus für maschinelles Lernen verkörpert ist; und
Rendern des zweiten Symbols, das dem unkorrigierten Ergebnis entspricht;
wobei mindestens ein vorhergesagtes Ereignis einem missionskritischen Systemausfall entspricht und das entsprechende unkorrigierte Ergebnis einen Zeitpunkt nach dem missionskritischen Systemausfall angibt, zu dem die Mission abgebrochen werden muss.

6. Verfahren nach Anspruch 5, wobei:
der vorhergesagte Zeitpunkt eine Degradationskurve umfasst; und ferner umfassend das Rendern der Degradationskurve über ein entsprechendes Fenster des Auftretens hinweg.

7. Verfahren nach einem der Ansprüche 5 oder 6, ferner umfassend:
periodisches Empfangen von Aktualisierungen der einen oder mehreren vorhergesagten Ereignisse; und
Aktualisieren einer entsprechenden Symbolik auf der Missionszeitleiste; und/oder
wobei das eine oder die mehreren vorhergesagten Ereignisse über eine Bayes'sche Analyse von Luftfahrzeugbedingungen und Umgebungsbedingungen bestimmt werden.

8. Pilotenbewusstseinssystem, umfassend:
eine Anzeige (104); und
mindestens einen Prozessor (100) in Datenkommunikation mit der Anzeige (104) und einen Speicher (102), der prozessorausführbaren Code zum Konfigurieren des mindestens einen Prozessors speichert, um:
ein oder mehrere vorhergesagte Ereignisse zu empfangen, wobei jedes des einen oder der mehreren vorhergesagten Ereignisse einen Ereignistyp, einen vorhergesagten Zeitpunkt des Ereignisses und ein unkorrigiertes Ergebnis umfasst;
einen Ort auf einer gerenderten Missionszeitleiste zu bestimmen, der dem vorhergesagten Zeitpunkt jedes des einen oder der mehreren vorhergesagten Ereignisse entspricht;
ein erstes Symbol für jedes vorhergesagte Ereignis auf der Grundlage des Ereignistyps zu bestimmen;
ein zweites Symbol zu bestimmen, das dem unkorrigierten Ergebnis entspricht;
das erste Symbol an dem bestimmten Ort zu rendern; und
das zweite Symbol zu rendern, das dem unkorrigierten Ergebnis entspricht;
wobei:
der vorhergesagte Zeitpunkt ein gewichtetes Wahrscheinlichkeitsfenster des Auftretens umfasst, und wobei der mindestens eine Prozessor ferner konfiguriert ist, um das gewichtete Wahrscheinlichkeitsfenster als variabel schattierten Bereich zu rendern, der durch Wahrscheinlichkeiten des vorhergesagten Zeitpunkts definiert ist, wie sie durch eine statistische Analyse ähnlicher Ereignisse definiert sind, die in einem Algorithmus für maschinelles Lernen verkörpert ist; und mindestens ein vorhergesagtes Ereignis einem missionskritischen Systemausfall entspricht und das entsprechende unkorrigierte Ergebnis einen Zeitpunkt nach dem missionskritischen Systemausfall angibt, zu dem die Mission abgebrochen werden muss.

9. Pilotenbewusstseinssystem nach Anspruch 8, wobei:
der vorhergesagte Zeitpunkt eine Degradationskurve umfasst; und der mindestens eine Prozessor ferner konfiguriert ist, um die Degradationskurve über ein entsprechendes Fenster des Auftretens hinweg zu rendern.

10. Pilotenbewusstseinssystem nach einem der Ansprüche 8 oder 9,
wobei der mindestens eine Prozessor ferner konfiguriert ist, um: periodisch Aktualisierungen der einen oder mehreren vorhergesagten Ereignisse zu empfangen; und
eine entsprechende Symbolik auf der Missionszeitleiste zu aktualisieren.

11. Pilotenbewusstseinssystem nach einem der Ansprüche 8, 9 oder 10, wobei das eine oder die mehreren vorhergesagten Ereignisse über ein neuronales Netz bestimmt werden, das konfiguriert ist, um Luftfahrzeugbedingungen und Umgebungsbedingungen zu empfangen.

## Revendications

1. Appareil informatique comprenant :
un affichage (104) ; et
au moins un processeur (100) en communication de données avec l'affichage et une mémoire (102) stockant un code exécutable par processeur pour configurer l'au moins un processeur pour :
recevoir un ou plusieurs événements prédits, chacun des un ou plusieurs événements prédits comprenant un événement, un temps prédit de l'événement et un résultat non corrigé, le temps prédit comprenant une fenêtre de probabilité pondérée d'occurrence ; déterminer un emplacement sur une chronologie de mission affichée correspondant au temps prédit de chacun des un ou plusieurs événements prédits ;
déterminer un premier symbole pour chaque événement prédit sur la base du type d'événement ;
déterminer un second symbole correspondant au résultat non corrigé ;
afficher le premier symbole au niveau de l'emplacement déterminé ;
afficher le second symbole correspondant au résultat non corrigé ; et
afficher la fenêtre de probabilité pondérée à l'aide de l'opacité pour communiquer la probabilité croissante ou décroissante d'occurrence telle que définie par une analyse statistique d'événements similaires incorporée dans un algorithme d'apprentissage automatique ;
dans lequel au moins un événement prédit correspond à une défaillance de système critique de mission et le résultat non corrigé correspondant indique un moment après la défaillance de système critique de mission auquel la mission devra être interrompue.

2. Appareil informatique selon la revendication 1, dans lequel :
le temps prédit comprend une courbe de dégradation ; et
l'au moins un processeur est en outre configuré pour afficher la courbe de dégradation sur une fenêtre d'occurrence correspondante.

3. Appareil informatique selon une quelconque revendication précédente, dans lequel l'au moins un processeur est en outre configuré pour :
recevoir périodiquement des mises à jour concernant les un ou plusieurs événements prédits ; et
mettre à jour la symbologie correspondante sur la chronologie de mission.

4. Appareil informatique selon une quelconque revendication précédente, dans lequel les un ou plusieurs événements prédits sont déterminés via une analyse bayésienne des conditions d'aéronef et des conditions environnementales.

5. Procédé comprenant :
la réception d'un ou de plusieurs événements prédits, chacun des un ou plusieurs événements prédits comprenant un type d'événement, un temps prédit de l'événement et un résultat non corrigé, le temps prédit comprenant une fenêtre de probabilité pondérée d'occurrence ;
la détermination d'un emplacement sur une chronologie de mission affichée correspondant au temps prédit de chacun des un ou plusieurs événements prédits ;
la détermination d'un premier symbole pour chaque événement prédit sur la base du type d'événement ;
la détermination d'un second symbole correspondant au résultat non corrigé ;
l'affichage du premier symbole au niveau de l'emplacement déterminé sur la chronologie de mission ;
l'affichage de la fenêtre de probabilité pondérée à l'aide de l'opacité pour communiquer la probabilité croissante ou décroissante d'occurrence telle que définie par une analyse statistique incorporée dans un algorithme d'apprentissage automatique ; et
l'affichage du second symbole correspondant au résultat non corrigé ;
dans lequel au moins un événement prédit correspond à une défaillance de système critique de mission et le résultat non corrigé correspondant indique un moment après la défaillance de système critique de mission auquel la mission devra être interrompue.

6. Procédé selon la Revendication 5, dans lequel :
le temps prédit comprend une courbe de dégradation ; et
comprenant en outre l'affichage de la courbe de dégradation sur une fenêtre d'occurrence correspondante.

7. Procédé selon l'une quelconque des revendications 5 ou 6, comprenant en outre :
la réception périodique des mises à jour concernant les un ou plusieurs événements prédits ; et
la mise à jour de la symbologie correspondante sur la chronologie de mission ; et/ou
dans lequel les un ou plusieurs événements prédits sont déterminés via une analyse bayésienne des conditions d'aéronef et des conditions environnementales.

8. Système de sensibilisation des pilotes comprenant :
un affichage (104) ; et
au moins un processeur (100) en communication de données avec l'affichage (104) et une mémoire (102) stockant un code exécutable par processeur pour configurer l'au moins un processeur pour :
recevoir un ou plusieurs événements prédits, chacun des un ou plusieurs événements prédits comprenant un type d'événement, un temps prédit de l'événement et un résultat non corrigé ;
déterminer un emplacement sur une chronologie de mission affichée correspondant au temps prédit de chacun des un ou plusieurs événements prédits ;
déterminer un premier symbole pour chaque événement prédit sur la base du type d'événement ;
déterminer un second symbole correspondant au résultat non corrigé ;
afficher le premier symbole au niveau de l'emplacement déterminé ; et
afficher le second symbole correspondant au résultat non corrigé ;
dans lequel :
le temps prédit comprend une fenêtre de probabilité pondérée d'occurrence, et dans lequel l'au moins un processeur est en outre configuré pour afficher la fenêtre de probabilité pondérée sous la forme d'une région à ombrage variable définie par les probabilités du temps prédit telles que définies par une analyse statistique d'événements similaires incorporée dans un algorithme d'apprentissage automatique ; et
au moins un événement prédit correspond à une défaillance de système critique de mission et le résultat non corrigé correspondant indique un moment après la défaillance de système critique de mission auquel la mission devra être interrompue.

9. Système de sensibilisation des pilotes selon la revendication 8, dans lequel :
le temps prédit comprend une courbe de dégradation ; et
l'au moins un processeur est en outre configuré pour afficher la courbe de dégradation sur une fenêtre d'occurrence correspondante.

10. Système de sensibilisation des pilotes selon l'une quelconque des revendications 8 ou 9,
dans lequel l'au moins un processeur est en outre configuré pour :
recevoir périodiquement des mises à jour concernant les un ou plusieurs événements prédits ; et
mettre à jour la symbologie correspondante sur la chronologie de mission.

11. Système de sensibilisation des pilotes selon l'une quelconque des revendications 8, 9 ou 10, dans lequel les un ou plusieurs événements prédits sont déterminés via un réseau neuronal configuré pour recevoir des conditions d'aéronef et des conditions environnementales.
